# EUROPEAN PATENT APPLICATION

(11) **EP 3 792 159 A1**
(43) Date of publication of application: **17.03.2021**
(21) Application number: 19207882.2
(22) Date of filing: 08.11.2019
(51) Int. Cl.: B62D 35/00, B62D 37/02

(54) **DRIVING MECHANISM FOR AN ACTIVE FRONT SPLITTER**

(30) Priority: 10.09.2019 CN 201910854163; 10.09.2019 CN 201921502248 U
(71) Applicant: Yanfeng Plastic Omnium Automotive Exterior Systems Co., Ltd., Shanghai 201805 (CN); Compagnie Plastic Omnium, 69007 Lyon (FR)
(72) Inventor: MAO, Fengwei, Shanghai 201805 (CN); GUI, Xiaogang, Shanghai 201805 (CN); XU, Jie, Shanghai 201805 (CN); ZHANG, Chen, Shanghai 201805 (CN)
(74) Representative: LLR

(57) **Abstract**

A driving mechanism (18) for an active front splitter (16) comprising a framework (2) and an electric motor (1) mounted in the middle of the framework. Each of the two ends of the framework is provided with a transmission mechanism (19) which connects the electric motor (1) and the active front splitter (16) and is connected to the framework through a movable connection. The driving mechanism according to the invention is able to control the movement of the active front splitter, so as to achieve the expected aerodynamic performance of an assembled automobile while ensuring its trafficability.

## Description

### FIELD OF THE INVENTION

The invention relates to the field of automotive exterior parts, and more particularly, a driving mechanism for an active front splitter.

### BACKGROUND OF THE INVENTION

With the implementation of policies regarding reducing energy consumption and emissions, the fuel consumption requirements of automobiles are becoming stricter. To reduce fuel consumption, in addition to improving the formula of fuel and reducing the overall weight of an automobile, OEMs consider modifying the form of a front splitter to improve the aerodynamic state of an assembled automobile, i.e., achieving the objectives of reducing drag, saving fuel, and reducing energy consumption and emissions by reducing the quantity of air passing through the bottom of the automobile so as to reduce air turbulences, and performing adjustment via computer simulations.

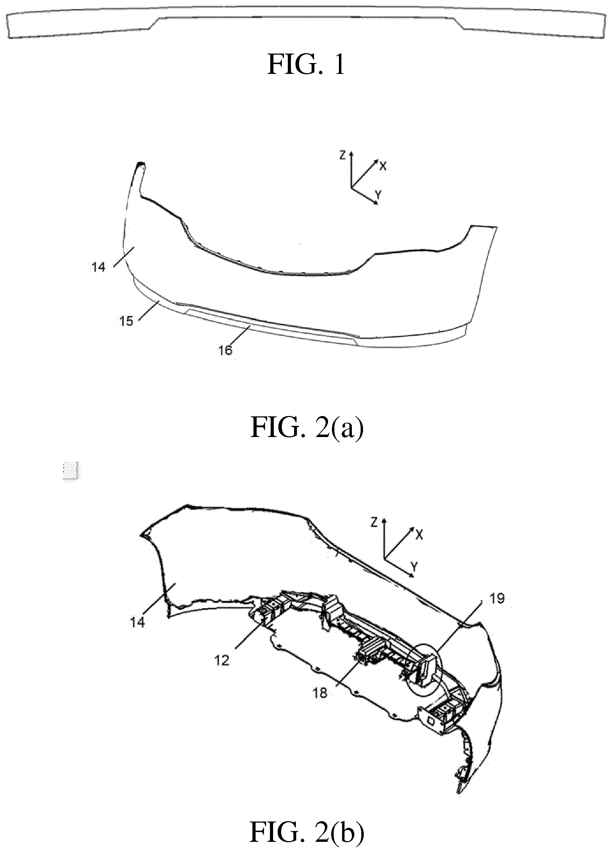

Currently, as shown in Figure 1, the front splitter of an assembled automobile in the market is of the fixed type. Because of trafficability requirements of the assembled automobile, the front splitter has a relatively small dimension along the Z direction in its middle. Otherwise, it is susceptible of clashing with obstacles on the road. As a result, the dimensions of the front splitter are limited, which causes failure to meet the design requirements of reducing wind drag and thus causes limited aerodynamic performance of the assembled automobile.

Vis-à-vis the existing drawbacks with the fixed-type front splitter described above, the applicant has developed an active front splitter. However, due to the limitation on its moving trajectory, the active front splitter is unable to meet the trafficability and aerodynamic performance requirements of an assembled automobile at the same time.

### SUMMARY OF THE INVENTION

To solve the problem that existing active front splitters are unable to meet the trafficability and aerodynamic performance requirements of an assembled automobile at the same time due to the limitation on their moving trajectories, the invention provides a driving mechanism for an active front splitter.

The driving mechanism for an active front splitter provided by the invention comprises a framework and an electric motor mounted in the middle of the framework. Each of the two ends of the framework is provided with a transmission mechanism that connects the electric motor and the active front splitter and is connected to the framework through a movable connection.

In an embodiment, the transmission mechanism comprises:
- a main shaft, which is connected with the electric motor;
- a connecting rod, which is fixed to the active front splitter;
- a first swing arm, one end of which being connected with the main shaft and the other end being fixedly connected with the connecting rod; and
- a second swing arm, one end of which being fixedly connected with the connecting rod and the other end being pivotally connected with a pivot arranged on the end of the framework,
the first swing arm being driven by the main shaft and drives the connecting rod to move along a trajectory defined by the first and second swing arms. After adjustment, the trajectory is defined in an inclined direction between Z and X directions. The active front splitter, fixed to the connecting rod, is thus driven to be movable along this inclined direction between an extended position and a retreated position.

In an embodiment, the main shaft is integrally formed in plastic and comprises a reinforcing structure to reduce the loss of torque. The reinforcing structure may comprise hollowed parts and/or reinforcing ribs. Alternatively, the main shaft can also be formed in metal and having its two ends formed in plastic.

In an embodiment, a side mounting plate is provided at each end of the framework, the transmission mechanism being mounted on the side mounting plate.

In an embodiment, the transmission mechanism is connected to the active front splitter via a support arranged on the active front splitter.

In an embodiment, the driving mechanism is mounted on a lower beam by means of a mounting plate.

In an embodiment, a motor protecting housing is mounted to the electric motor.

In an embodiment, a mechanism protecting cover is mounted to each end of the framework.

According to another aspect of the invention, the active front splitter driven by the driving mechanism as described above cooperates with a fixed front splitter to form a front splitter assembly.

In an embodiment of the front splitter assembly, the active front splitter is provided on its outer face with a protrusion that creates a zero-clearance fit with the fixed front splitter. This design can effectively reduce the deformation of the fixed front splitter under the pressure of high-speed wind and enhance the sealing between the active front splitter and the fixed front splitter, so as to achieve expected aerodynamic performance.

In another embodiment of the front splitter assembly, the active front splitter comprises a back plate and a decorative plate attached or bonded thereto, a protrusion being provided on the decorative plate and creates a zero-clearance fit with the fixed front splitter.

According to the invention, the movement of the active front splitter is controlled by the driving mechanism that is able to drive the active front splitter to move in an inclined direction. By calibrating the location and length of a torque transmitting rod of the main shaft in the driving mechanism to determine the moving trajectory of the active front splitter, the invention enables an assembled automobile to achieve expected aerodynamic performance while ensuring its trafficability.

### BRIEF DESCRIPTION OF THE DRAWINGS

Figure 1 is a schematic view of a fixed-type front splitter of the prior art.
Figure 2(a) is a schematic view of an active front splitter according to the invention.
Figure 2(b) is an assembled view of a driving mechanism according to the invention.
Figure 3 is an exploded view of the assembly of a driving mechanism according to the invention and an active front splitter.
Figure 4 is a schematic diagram of a driving mechanism for an active front splitter according to the invention.
Figure 5 is a schematic diagram of a main shaft of a driving mechanism for an active front splitter according to the invention.
Figure 6 is a schematic view of the fitting between an active front splitter according to the invention and a fixed front splitter.

### DETAILED DESCRIPTION OF THE EMBODIMENTS

The following provides preferred embodiments of the present invention with reference to the accompanying drawings and provides detailed descriptions.

In the present embodiment, an active front splitter is added to a fixed front splitter, so as to compensate the reduced dimension along Z direction in the middle due to the trafficability requirements of the assembled automobile. As shown in Figure 2(a), the active front splitter 16 extends rearward behind the fixed front splitter 15 along the X direction, and is exposed below a bumper skin 14.

As shown in Figure 2(b), the driving mechanism 18 for an active front splitter according to the invention is connected with the lower beam 12 of the assembled automobile, and is mounted on the active front splitter 16 in the reverse X direction.

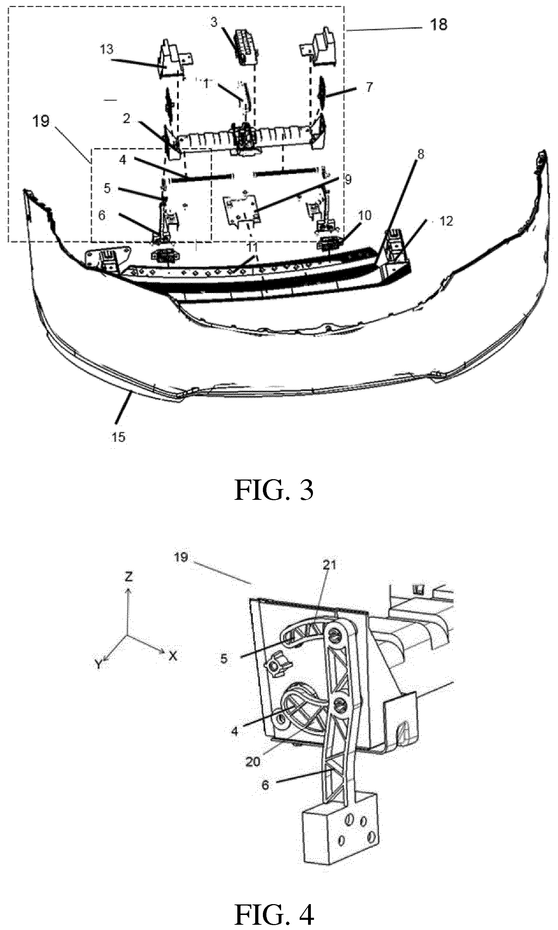

An exploded view of the assembly of the driving mechanism according to the invention and the active front splitter is shown in Figure 3. The driving mechanism 18 comprises an electric motor 1, a framework 2, side mounting plates 7 and transmission mechanisms 19. The transmission mechanism 19 is pivotally connected with each of the two ends of the framework 2, to which the side mounting plate 7 is mounted. The electric motor 1 is mounted in the middle part of the framework 2.

The transmission mechanism 19 comprises a main shaft 4, a connecting rod 6, a first swing arm 20 and a second swing arm 21. One end of the main shaft 4 is connected with the electric motor 1. As shown in Figure 4, the other end of the main shaft 4 is mounted to the side mounting plate 7 and connected with the first swing arm 20. The first swing arm 20 is at the same time fixedly connected with the connecting rod 6. The connecting rod 6 is also fixedly connected with the second swing arm 21. In addition, the second swing arm 21 is pivotally connected to a pivot 5 arranged on the side mounting plate 7, so that the second swing arm 21 is able to rotate around the pivot 5.

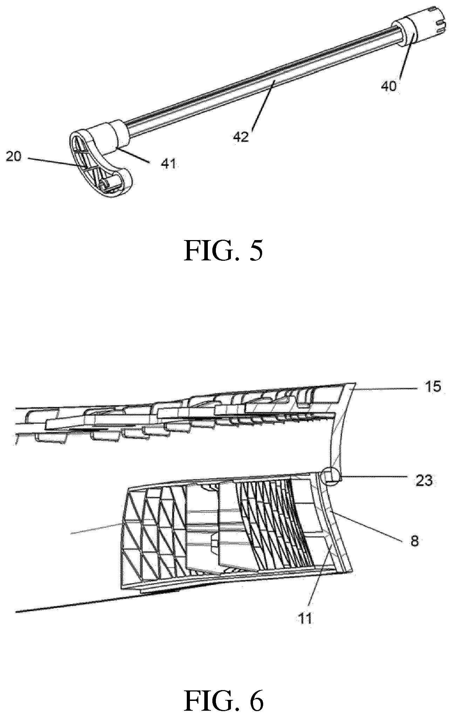

Figure 5 is a schematic diagram of the main shaft. The end connected with the electric motor 1 is a torque input end 40. The end fixedly connected with the first swing arm 20 is a torque output end 41. A torque transmitting rod 42 connects the two ends, which may be made in two types of structure:
The first type is a separated structure. The torque input end 40 and the torque output end 41 are formed by a plastic injection process on the torque transmitting rod 42 which is a metallic rod. This type of structure can reduce to the maximum the loss of torque during transmission.

The second type is an integral structure, i.e., integrally formed by plastic injection with the torque input end 40 and the torque output end 41. The torque transmitting rod 42 has a reinforcing structure to reduce the torsion of the rod itself, thus reducing the loss of torque. The reinforcing structure may include hollowed parts or reinforcing ribs.

The active front splitter 16 comprises a decorative plate 8, a back plate 11, and a mounting support 10. The decorative plate 8 and the back plate 11 are bonded together by gluing or a 3M tape. The mounting support 10 is mounted on the back plate 11 and is connected with the connecting rod 6.

Once all parts are mounted, the driving mechanism 18 is mounted on a mounting metal plate 9, which is welded to the lower beam 12.

In the present embodiment, the electric motor 1 is provided with a protecting cover 3, and the mounting framework 2 is provided with a mechanism protecting cover 13 at each of its two ends.

After mounting, the driving mechanism 18 according to the invention needs to be calibrated. By calibrating the position and length of the second swing arm 21, the moving trajectory of the active front splitter can be changed. With the assistance of computer simulations, the position and length of the torque transmitting rod 42 are finally determined so that the performance of the active front splitter is maximized.

The main shaft 4 drives the active front splitter 16 to move as follows: the main shaft 4 rotates and outputs a torque to drive the first swing arm 20 to rotate around its end fixed with the main shaft 4. The first swing arm thus drives the connecting rod 6 which in turn drives the second swing arm 21 to rotate around the pivot 5. As such, the connecting rod 6 moves along a trajectory that is defined under the collective limitation of the swing arms 20 and 21. In a preferred embodiment, the active front splitter 16 is driven to move in an inclined direction between Z and X directions. When an automobile runs normally, the front splitter moves to a forwardly extended state and the ground clearance is reduced. The amount of air entering below the chassis of the automobile can thus be reduced and the downforce of the automobile is increased. Therefore, the wind drag is reduced, so that the aerodynamic performance of the assembled automobile is enhanced. When encountering an obstacle or rugged road surface, the active front splitter moves to a retreated state. At this moment, the ground clearance of the automobile is increased so that the automobile is able to pass successfully.

Further, considering the aesthetics aspect and sealing requirements, in the present embodiment, as shown in Figure 6, a protrusion 23 is provided on the decorative plate 8 of the active front splitter, so that the active front splitter 16 is fitted to the fixed front splitter 15 with zero clearance. This design can effectively reduce the deformation of the fixed front splitter 15 under the pressure of high speed wind, and enhance the sealing between the active front splitter 16 and the fixed front splitter 15, so that an assembled automobile achieves expected aerodynamic performance.

In other embodiments of the invention, a fully active front splitter, instead of the assembly of an active front splitter and a fixed front splitter, can also be used. In such embodiments with fully active front splitter, the trafficability of the automobile is enhanced while ensuring the enhancement of its aerodynamic performance.

The foregoing descriptions are merely preferred embodiments of the present invention, but are not intended to limit the scope of the present invention. Various changes may be further made to the foregoing embodiments of the present invention. That is, a simple, equivalent change and modification made according to the claims of this application and the content of the specification of the present invention shall fall within the protection scope of the present invention. What is not described in detail in the present invention all belongs to common technologies.

## Claims

1. A driving mechanism (18) for an active front splitter (16), comprising a framework (2) and an electric motor (1) mounted in the middle of the framework, each of the two ends of the framework being provided with a transmission mechanism (19) which connects the electric motor (1) and the active front splitter (16) and is connected to the framework (2) through a movable connection.

2. The driving mechanism according to claim 1, wherein the transmission mechanism (19) comprises:
- a main shaft (4), which is connected with the electric motor (1);
- a connecting rod (6), which is fixed to the active front splitter (16);
- a first swing arm (20), one end of which being connected with the main shaft (4) and the other end being fixedly connected with the connecting rod (6); and
- a second swing arm (21), one end of which being fixedly connected with the connecting rod (6) and the other end being pivotally connected with a pivot (5) arranged on the end of the framework (2),
the first swing arm (20) being driven by the main shaft (4) and drives the connecting rod (6) to move along a trajectory defined by the first and second swing arms (20, 21).

3. The driving mechanism according to claim 2, wherein the main shaft (4) is integrally formed in plastic and comprises a reinforcing structure to reduce the loss of torque.

4. The driving mechanism according to anyone of the preceding claims, wherein a side mounting plate (7) is provided at each end of the framework, the transmission mechanism (19) being mounted on the side mounting plate (7).

5. The driving mechanism according to anyone of the preceding claims, wherein the transmission mechanism (19) is connected to the active front splitter (16) via a support (10) arranged on the active front splitter (16).

6. The driving mechanism according to anyone of the preceding claims, wherein the driving mechanism (18) is mounted on a lower beam (12) by means of a mounting plate (9).

7. The driving mechanism according to anyone of the preceding claims, wherein a motor protecting housing (3) is mounted to the electric motor (1).

8. The driving mechanism according to anyone of the preceding claims, wherein a mechanism protecting cover (13) is mounted to each end of the framework (2).

9. A front splitter assembly, comprising a fixed front splitter (15) and an active front splitter (16) which is driven by the driving mechanism (18) according to anyone of the preceding claims.

10. The front splitter assembly according to claim 9, wherein the active front splitter (16) is provided on its outer face with a protrusion (23) that creates a zero-clearance fit with the fixed front splitter (15).

11. The driving mechanism according to claim 9, wherein the active front splitter (15) comprises a back plate (11) and a decorative plate (8) attached or bonded thereto, a protrusion (23) being provided on the decorative plate (8) and creates a zero-clearance fit with the fixed front splitter (15).
